# FASCICULE DE BREVET EUROPEEN

(11) **EP 1 804 709 B1**
(45) Date de publication et mention de la délivrance du brevet: **19.03.2008**
(21) Numéro de dépôt: 05815556.5
(22) Date de dépôt: 20.10.2005
(51) Int. Cl.: A61C 5/02

(54) **APPAREIL DE TRAITEMENT DENTAIRE A LIME ROTATIVE**
DREHBARE FEILENVORRICHTUNG ZUR ZAHNBEHANDLUNG
ROTATABLE FILE DENTAL TREATING DEVICE

(30) Priorité: 25.10.2004 FR 0452430
(43) Date de publication de la demande: 11.07.2007
(73) Titulaire: Xelyx, 33290 Blanquefort (FR)
(72) Inventeur: HERAUD, Roger, F-33480 AVENSAN (FR)
(74) Mandataire: Schmit, Christian Norbert Marie
(86) Numéro de dépôt international: PCT/FR2005/050877
(87) Numéro de publication internationale: WO 2006/045974

(56) Documents cités:
- US-A- 4 193 408
- US-A- 5 902 105
- US-A- 5 980 248

## Description

La présente invention concerne les appareils de traitement dentaire à limes rotatives.

Actuellement, les appareils de traitement dentaire utilisant les limes rotatives, telles que les limes nickel-titane de différent diamètre en fonction du travail dentaire à réaliser, dans les canaux dentaires disposent de moyens de mesure de couple et/ou de mesure de longueur canalaire pour limiter la casse des limes et/ou arrêter la rotation de la lime dans la région apicale, mais ne disposent pas encore ou peu, de moyens de sécurité pour éviter la casse des limes, contrôler la précision de l'arrêt de la lime dans la région apicale, ou bien pour éviter la projection de débris dentinaires dans ou sous la région apicale.

Pour des raisons de stabilité de mesure ou de conception, quel que soit le moyen de mesure, la mesure de position canalaire de la lime est une mesure moyennée et lissée qui permet d'éliminer les mesures aberrantes ou les fluctuations de vitesse de la lime.

Une telle mesure lissée ne donne pas à tout instant la position exacte de la lime, un retard parfois important étant constaté sur la mesure de position de la lime.

Ceci est d'autant plus important que le praticien doit appliquer un mouvement de va et vient pour faire ressortir les boues dentinaires et que la vitesse d'insertion des limes dans la dent n'est pas maîtrisée.

Cette situation cause une source d'erreur non négligeable sur la profondeur atteinte par la lime dans le canal vis à vis d'une consigne précise de profondeur à atteindre.

Les documents US 5902105 et US 5980248 décrivent des appareils de traitement dentaire comportant des moyens adaptés pour ralentir progressivement la vitesse de rotation d'un moteur entraînant la lime avant son arrêt afin que le travail de la lime diminue avec la baisse de vitesse de rotation du moteur.

Un inconvénient de cette méthode est que, lorsque le moteur ralentit, la lime ne travaille plus normalement et notamment peut être amenée à travailler par à coups de torsion, ce qui fatigue la lime et diminue sa fiabilité.

En outre lorsque la lime est dans la région apicale, un ralentissement de la lime peut causer un vissage de la lime dans la dent ce qui induit un risque de percer le conduit avec projection de débris sous l'apex, source d'infection, ou de casser la lime.

Un procédé connu pour arrêter le moteur consiste à mesurer le courant consommé par le moteur aux bornes d'une résistance insérée dans le circuit de puissance, d'amplifier et d'intégrer ce signal, puis de le convertir au moyen d'un convertisseur analogique/digital afin de comparer le résultat de la conversion à une valeur représentative d'une limite de couple donnée avant d'intervenir sur l'intégrateur de l'asservissement et d'arrêter électriquement le moteur sur sa lancée.

Selon ce procédé, le moteur ne s'arrêtera que lorsque le couple faisant frein aura vaincu l'inertie de l'ensemble cinématique et logique.

Ce procédé a pour inconvénient supplémentaire que les retards introduits par la chaîne de mesure repoussent l'action d'arrêt désirée d'un temps non négligeable qui peut engendrer la fracture ou la casse de la lime dans la dent.

Pour éviter le vissage de la lime il a été aussi prévu dans le document US 5 980 248 de faire tourner la lime en arrière en vitesse rapide après l'arrêt apical. Un tel dispositif a pour inconvénient de renvoyer des débris dentinaires dans l'apex, ce qui est une source de contamination de la cavité dentaire.

Le document EP 0 966 237 décrit pour sa part un procédé et un dispositif de mesure en temps réel de la distance entre l'extrémité distale d'une électrode insérée dans le canal radiculaire d'une dent et l'apex dudit canal et de localisation de l'apex d'une dent.

La présente invention concerne un appareil de traitement dentaire à lime rotative perfectionné en ce qu'il comporte un dispositif permettant d'anticiper l'arrêt du moteur par rapport à une consigne de position définie par rapport à la profondeur du canal, permettant d'éviter de percer l'apex de la dent, d'éviter le renvoi des débris vers l'apex de la dent et minimisant la fatigue de la lime et les risques de casse de celle-ci dans la dent. Selon un mode de réalisation avantageux, l'appareil comprend un contrôle du couple moteur avec un dispositif d'arrêt sur dépassement d'un couple maximal.

La présente invention concerne en outre un procédé de contrôle d'un appareil de traitement dentaire à lime rotative permettant un arrêt très rapide du moteur faisant tourner la lime et, en relation avec la mesure de longueur canalaire un arrêt précis dans la région apicale (entre 0 et 2 mm de l'apex).

Plus précisément, l'invention concerne principalement un appareil de traitement dentaire à lime rotative entraînée par un moteur comportant des moyens pour fixer une consigne de position canalaire relative à l'apex d'une dent, des moyens d'arrêt du moteur en fonction de la position de la lime par rapport à ladite consigne de position, des premiers moyens de mesure et de calcul de la longueur canalaire restante entre la lime et la consigne de position, caractérisé en ce qu'il comporte des deuxièmes moyens de calcul d'au moins une valeur dérivée de la longueur canalaire restante et des troisièmes moyens de calcul, adaptés pour combiner la valeur dérivée et la longueur canalaire restante, la combinaison de la valeur dérivée et de la longueur canalaire par les moyens de calcul contrôlant les moyens de commande d'arrêt du moteur en sorte d'arrêter la rotation de la lime en anticipation de la consigne de position.

Ainsi, l'appareil selon l'invention permet d'anticiper l'arrêt du moteur en fonction de la vitesse d'insertion de la lime dans le canal.

Selon l'invention, ladite valeur dérivée peut notamment comprendre la dérivée première de la longueur canalaire restante et/ou la dérivée seconde de la longueur canalaire restante.

De manière avantageuse, les troisièmes moyens de calcul comprennent des moyens de pondération de la valeur dérivée par un coefficient d'ajustement calculé.

Le dispositif d'anticipation de l'arrêt du moteur selon l'invention permet d'amener et d'arrêter l'extrémité de la lime exactement à la valeur de la consigne, ceci quel que soit la vitesse de pénétration de la lime, sans dépassement de l'apex (en particulier sur canal large ou apex non formé) et permet de compenser les différents retards de mesure ainsi que les différences de force d'appui sur l'appareil entre les praticiens.

L'invention concerne en outre un appareil de traitement dentaire caractérisé en ce qu'il comporte des moyens de sélection d'un couple moteur maximum de référence, des moyens de mesure du couple appliqué à la lime et des moyens de calcul de dépassement du couple maximum contrôlant les moyens d'arrêt en rotation du moteur.

L'invention concerne en outre un procédé de commande de rotation d'une lime d'un appareil de traitement dentaire comportant principalement la détermination répétée d'une distance de la lime à une consigne de position canalaire relative à l'apex d'une dent, la détermination répétée d'une valeur dérivée de ladite distance et le calcul répété d'une position d'arrêt anticipée de la rotation de la lime en fonction de la distance de la lime à ladite consigne de position pondérée par un coefficient fonction de ladite dérivée.

Plus particulièrement, le procédé comporte une étape d'anticipation de l'activation de moyens d'arrêt en rotation de la lime en fonction de la valeur de ladite dérivée.

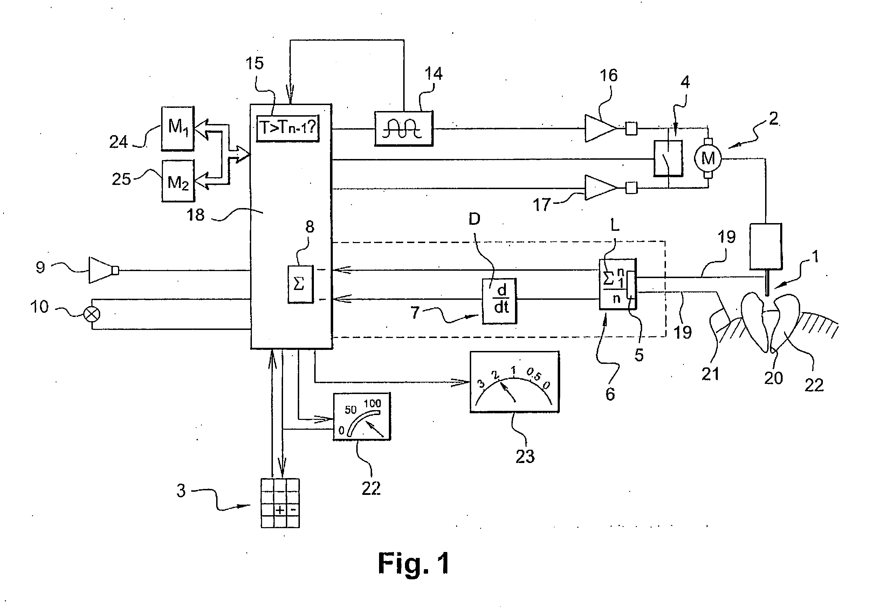

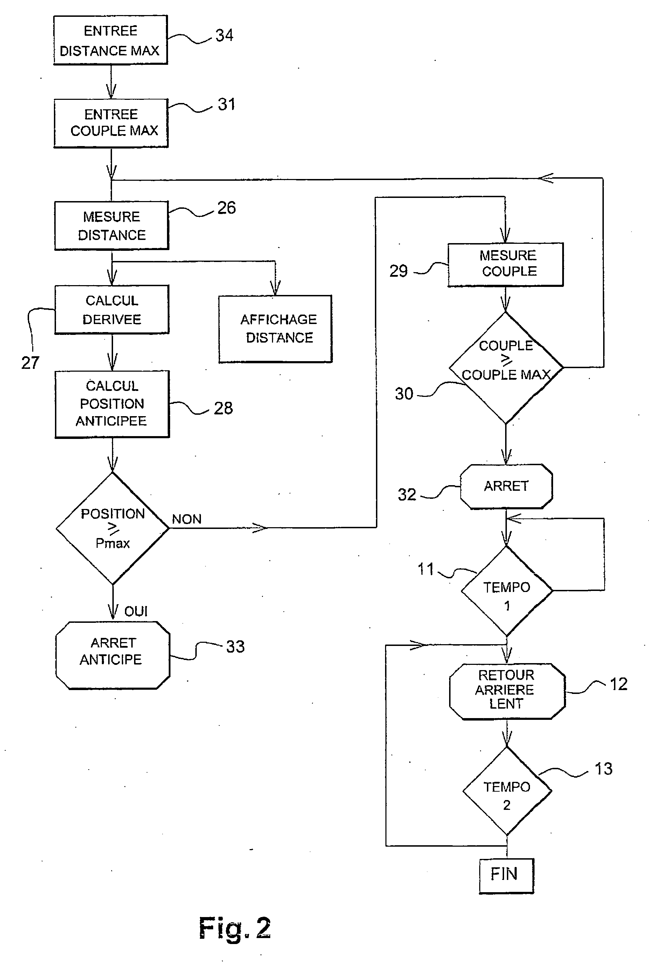

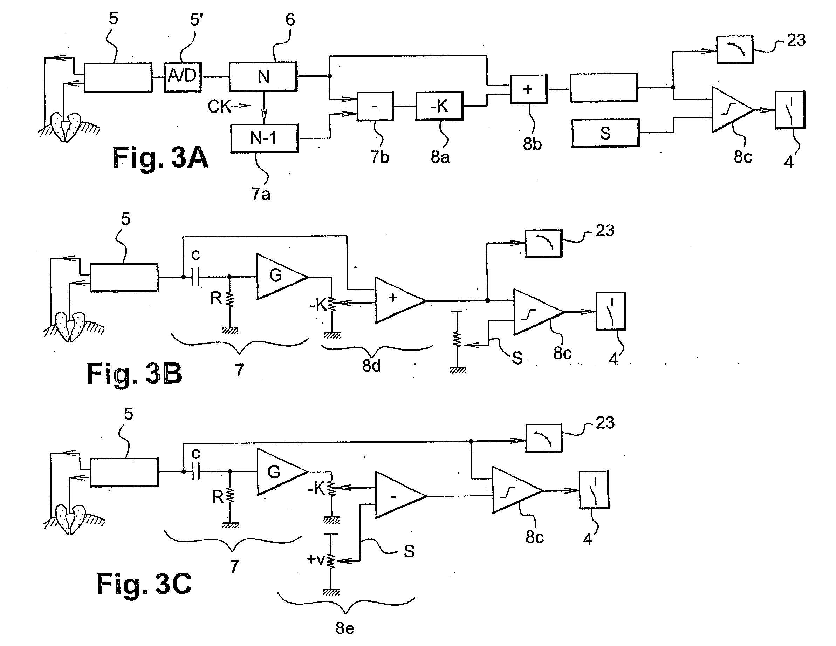

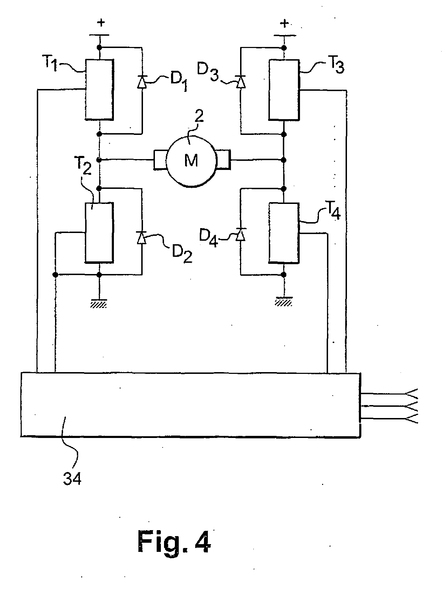

D'autres caractéristiques et avantages de l'invention seront mieux compris à la lecture de la description qui va suivre d'un exemple de réalisation non limitatif de l'invention en référence aux figures qui représentent:
- en figure 1:: une représentation schématique d'un appareil selon l'invention;
- en figure 2:: un exemple représentant des étapes du procédé selon l'invention;
- en figures 3A, 3B, 3C:: des variantes de réalisation d'éléments constitutifs de l'appareil selon l'invention;
- en figure 4:: un détail de l'appareil décrivant le système d'alimentation et d'arrêt rapide du moteur.

L'appareil de traitement dentaire représenté en figure 1 comporte une lime rotative 1 entraînée par un moteur 2.

L'appareil comporte, conformément à l'art antérieur décrit dans le document EP 0 966 237, un système de mesure de la distance de la lime 1 à l'apex 20 d'une dent 22. Ce système est selon l'exemple basé sur l'utilisation de la lime comme première électrode et l'utilisation d'une seconde électrode 21. Les électrodes sont reliées par des liaisons électriques 19 à des premiers moyens de mesure 5 combinés à des premiers moyens de calcul 6. Les moyens de mesure selon la figure 1, comportent une partie analogique 5 et une partie de conversion analogique numérique, les moyens de calcul 6 comportant des moyens de sommation d'une série de mesures et de moyennage par division de la somme des mesures par le nombre de mesures, cette opération étant réalisée par exemple au sein d'un microprocesseur 18.

Dans l'exemple de la figure 3A, la partie conversion analogique numérique est représentée sous la référence 5'.

L'appareil comporte des moyens 3, 18 pour fixer une consigne de position canalaire relative à l'apex d'une dent. Ces moyens comportent un dispositif d'entrée de données, tel qu'un clavier 3, et le microprocesseur 18. La consigne sélectionnée peut être affichée sur un dispositif d'affichage 23.

La consigne correspond à la distance à l'apex de la dent que l'on souhaite voir respectée par l'appareil.

L'appareil comporte des moyens 16, 17 de commande du moteur 2, ces moyens permettant de faire tourner la lime en marche avant ou en marche arrière.

L'arrêt du moteur est commandé en fonction de la position de la lime 1 par rapport à la consigne de position sélectionnée.

Comme vu précédemment, l'appareil comporte des premiers moyens de mesure 5 et de calcul 6 de la longueur canalaire (L) restante entre la lime et la consigne de position.

Selon l'invention, l'appareil comporte en outre des deuxièmes moyens de calcul 7 d'au moins une valeur dérivée (D) de la longueur canalaire restante.

Dans l'exemple de réalisation de la figure 3A, les moyens de calcul 7 sont décomposés en un registre de mémorisation d'une mesure N-1 de la distance restante, un élément soustracteur 7b soustrayant la valeur d'une mesure d'ordre N à la mesure d'ordre N-1 ce qui permet d'obtenir la variation de distance et donc une image de la dérivée de la longueur à un instant donnée séquencé par une horloge CK. La fonction schématisée en figure 3 peut avantageusement être réalisée au sein du microprocesseur 18 de la figure 1.

L'appareil schématisé en figure 1 comporte en outre des troisièmes moyens de calcul 8, adaptés pour combiner la valeur dérivée et la longueur canalaire restante, la combinaison de la valeur dérivée et de la longueur canalaire par les moyens de calcul 6, 7, 8 contrôlant les moyens d'arrêt du moteur en sorte d'arrêter la rotation de la lime en anticipation de la consigne de position.

Ladite valeur dérivée (D) comprend en particulier la dérivée première de la longueur canalaire restante.

Cette valeur dérivée est la dérivée du déplacement de la lime et correspond à la vitesse de progression de la lime dans le canal pendant l'insertion.

Cette vitesse est obtenue par dérivation de la mesure de la longueur canalaire restante au niveau des deuxièmes moyens de calcul 7, les troisièmes moyens de calcul 8 comprennent des moyens de pondération de la valeur dérivée (D) par un coefficient d'ajustement calculé de sorte que le résultat du calcul agit sur la consigne par addition, moyennant un coefficient d'ajustement, de manière à ce que l'arrêt du moteur s'effectue avant que soit atteinte la valeur de consigne.

Les troisièmes moyens de calcul détaillés dans le cadre de l'exemple de la figure 3A comportent une opération 8a de multiplication de la valeur calculée par un coefficient K de pondération au niveau des moyens 7b et une opération 8b d'addition de la valeur dérivée pondérée à la valeur mesurée.

Comme vu précédemment, les moyens de calcule 6, 7, 8 peuvent être réalisés par un microcontrôleur ou microprocesseur 18 et un programme situé dans une mémoire permanente 24, les données de mesure et les données calculées étant stockées et traitées dans une mémoire dynamique 25.

Pour obtenir la dérivée, on met en mémoire une paire de mesures de position séparées d'un temps donné, par exemple 50 millisecondes et on soustrait l'une à l'autre, l'écart représente alors la dérivée en plus ou en moins, cette opération étant répétée par itérations selon un séquencement défini par l'horloge CK tout au long du travail de la lime.

Selon l'exemple, la valeur positive donnée par la progression de la lime vers l'apex plutôt que qu'un écart de distance négatif nous intéresse. La consigne étant positive, on calcule la valeur absolue de la dérivée pour obtenir une valeur positive.

Le coefficient K sera défini en fonction des paramètres de l'appareil et notamment des retards dans la chaîne de mesure, de la vitesse de rotation du moteur et de ses capacités à s'arrêter brusquement pour formater la dérivée avant de l'additionner à la consigne de façon à fournir une limite de position calculée à tout instant pour déclencher l'arrêt anticipé du moteur.

Ainsi l'invention permet, malgré les différents retards tels que filtrage de la mesure et autres retards de la chaîne de mesure, d'amener et d'arrêter l'extrémité de la lime exactement à la valeur de la consigne, ceci quelle que soit la vitesse de pénétration de la lime, sans dépassement de l'apex et en particulier sur canal large ou apex non formé.

Toujours selon la figure 3A, le résultat obtenu par les moyens de calcul 8, est d'une part dirigé vers les moyens d'affichage 23 et d'autre part comparé, au niveau d'un comparateur 8c, à un seuil de référence S correspondant à la limite à ne pas dépasser afin de piloter les moyens d'arrêt 4.

Selon un mode de réalisation alternatif ou complémentaire, ladite valeur dérivée (D) comprend la dérivée seconde de la longueur canalaire restante, cette valeur étant alors représentative de l'accélération, qui est la double dérivée du déplacement, au lieu de la vitesse, ceci permettant d'arrêter le moteur encore plus rapidement dans un vissage par exemple ou l'accélération de la lime est forte.

D'autres exemples de réalisation sont représentés en figure 3B et 3C.

La figure 3B concerne un exemple de réalisation pour lequel les moyens de calcul de la dérivé sont réalisés sons forme d'un différenciateur analogique, les moyens de calcul 8d adaptés pour combiner la valeur mesurée et la dérivée sont constitués d'un sommateur analogique additionnant une tension représentative de la dérivée affectée d'un coefficient K de pondération.

Selon cette figure, la valeur sommée est d'une part transmise aux moyens d'affichage 23 et, d'autre part comparée au niveau d'un comparateur 8c à une tension représentative du seuil à ne pas dépasser, le comparateur commandant les moyens d'arrêt 4 en cas de dépassement de ladite tension.

La figure 3C représente une variante de réalisation pour laquelle la mesure de distance par les moyens de mesure 5 est d'une part directement transmise aux moyens d'affichage 23, d'autre part transmise à un étage différenciateur analogique constituant les moyens de calcul 7 de la dérivée, cette dernière étant pondérée au niveau de moyens de calcul 8e par un coefficient K et réduite d'un coefficient représentatif d'un seuil S et comparée au niveau d'un comparateur 8c à la valeur de distance mesurée pour piloter les moyens d'arrêt.

L'invention concerne en outre un procédé tel que décrit en figure 2 et comportant notamment la détermination répétée d'une distance de la lime à une consigne de position canalaire relative à l'apex d'une dent par une mesure 26, la détermination répétée d'une valeur dérivée de ladite distance par calcul 27 et le calcul répété 28 d'une position d'arrêt anticipée de la rotation de la lime en fonction de la distance de la lime à ladite consigne de position pondérée par un coefficient fonction de ladite dérivée.

Dans le cas d'un appareil comportant un calculateur numérique tel qu'un microprocesseur 18, la détermination répétée est une détermination périodique ou une succession discontinue de mesures.

Dans le cas d'un système analogique, la détermination répétée est continue.

Le procédé comporte une étape d'anticipation de l'activation de moyens d'arrêt en rotation de la lime en fonction de la valeur de ladite dérivée.

Une autre méthode pouvant être employée pour permettre un déclenchement anticipé du moteur est de soustraire, après formatage la dérivée à la mesure.

Cette méthode est utilisable lorsque la mesure calculée est une distance se rapprochant d'une consigne fixe dans un mouvement d'insertion.

Outre la mise en oeuvre du procédé, l'appareil de la figure 1 comprend des moyens complémentaires tels des moyens d'alerte d'un opérateur, moyens auditifs 9 ou visuels 10 déclenchés sur une activation des moyens d'arrêt ou déclenchés dès que la distance à la consigne se réduit.

Dans le cadre de l'utilisation d'un moteur à courant continu alimenté par un dispositif à modulation de largeur d'impulsion, l'invention comporte en mode de réalisation avantageux un dispositif d'arrêt sur détection d'un couple dépassant une valeur maximum définie à l'avance et entrée dans l'appareil à l'aide de moyens d'entrée 3 tels que schématisés dans la figure 1 en relation avec un programme de mémorisation de la valeur de couple à un instant t et de comparaison de la valeur de couple mémorisée avec la valeur de couple maximum mémorisée.

Le moteur par exemple un moteur à rotor sans fer, de faible inertie, est asservi en vitesse à une vitesse pré-établie soit par construction soit par entrée au travers des moyens d'entrée 3. Une vitesse habituelle pour la rotation de la lime est par exemple de l'ordre de 300 tr/min.

Une régulation de la vitesse du moteur est obtenue par un asservissement de la largeur d'impulsion du dispositif de commande PWM au travers d'un comparateur entre la FEM appliquée au moteur et une consigne représentative de la vitesse du moteur.

Le générateur PWM est piloté au travers d'un asservissement comportant la mesure de la force électromotrice au niveau du moteur au travers d'un intégrateur et/ou différenciateur numérique, de sorte que, lorsque la vitesse tend à diminuer à cause d'une demande de couple, la largeur d'impulsion augmente pour compenser la perte et revenir à la vitesse déterminée.

Inversement, si la vitesse augmente en réponse à une baisse de l'effort demandé au moteur, la largeur d'impulsion est diminuée par le dispositif d'asservissement pour ramener la vitesse à la vitesse de consigne.

- A partir du dispositif d'asservissement de la vitesse de rotation du moteur par le dispositif à modulation à largeur d'impulsion, l'appareil de traitement dentaire comporte un dispositif de mesure du couple appliqué à la lime à partir d'une mesure14 de la largeur d'impulsion.

Un procédé de mesure consiste à mesurer le couple régulièrement par un calcul sur la base de l'asservissement PWM, et à le comparer avec une limite de couple fixée à l'avance.

L'appareil comporte au niveau de ses moyens de calcul 18, des moyens permettant une détermination répétée du couple appliqué à la lime, une comparaison répétée du couple appliqué à la lime à la consigne de couple moteur maximum de référence, un test de détection du dépassement de ladite consigne de couple et une activation des moyens d'arrêt en rotation de la lime en réponse audit test.

Pour ce faire, l'appareil comporte des moyens 3 de sélection d'un couple moteur maximum de référence, des moyens 14 de mesure du couple appliqué à la lime et des moyens 15 de calcul de dépassement du couple maximum contrôlant les moyens 4 d'arrêt du moteur.

A partir de l'information de dépassement du couple, l'invention permet d'arrêter le moteur en un minimum de temps en court-circuitant la force électromotrice appliquée au moteur.

Pour réaliser la détection, un comparateur numérique compare une consigne calculée de couple et la largeur d'impulsion PWM.

Lorsque la largeur d'impulsion dépasse cette limite le couple défini par la consigne est dépassé.

Les moyens de calcul 18 donnent alors l'ordre d'arrêter le moteur immédiatement.

Il est toutefois envisageable selon l'invention d'éliminer les dépassements intempestifs dus aux variations instantanées de couple de l'asservissement. Pour ce faire, le dispositif peut effectuer plusieurs mesures dans un temps très court après le dépassement pour vérifier si le dépassement est toujours présent et ainsi confirmer la mesure et arrêter le moteur.

Une autre méthode peut consister à limiter la largeur d'impulsion PWM à la consigne maximale ce qui conduit à faire chuter la vitesse ou FEM puisque la largeur d'impulsion ne peut plus augmenter.

Pour déclencher l'arrêt, il suffira de comparer la chute de vitesse ou FEM à une consigne fixe ou proportionnelle à la vitesse pour déterminer le dépassement de couple donc l'arrêt du moteur.

On peut aussi associer les deux méthodes pour une sécurité de fonctionnement, par exemple en cas d'à coups d'efforts, l'arrêt du moteur est subordonné à la fois au dépassement de la valeur maximale de largeur d'impulsion et à la chute de la vitesse de rotation ou de la force électromotrice au dessous d'une limite inférieure.

Pour obtenir un arrêt rapide du moteur, les moyens 4 d'arrêt en rotation du moteur comportent en particulier selon l'exemple des moyens de court-circuit de la force électromotrice du moteur.

Dans un mode de réalisation particulier du procédé selon l'invention, on prévoit une étape d'arrêt du moteur suivie d'une étape de rotation lente de la lime en marche arrière pour dégager la lime tout en évitant de repousser les débris dentinaires dans l'apex.

Pour ce faire, l'appareil comporte des moyens de temporisation de l'arrêt du moteur au niveau du calculateur 18 et des moyens de commande du moteur 16, 17 adaptés pour provoquer un retour arrière de la lime pendant une durée déterminée 13 après la temporisation.

Un exemple de séquence pour cette fonction est représentée en figure 2, cette séquence comportant une étape 31 d'entrée du couple maximum à ne pas dépasser, une étape 29 de mesure et de détermination du couple, une étape 30 de comparaison et de test de dépassement du couple de consigne, suivie, dans le cas d'un dépassement de couple maximum, par un arrêt 32 du moteur, une première temporisation 11 et une séquence 12, 13 de marche arrière temporisée, puis un retour à la vitesse et rotation normales.

Dans le cas où le couple mesuré reste inférieur au couple maximum autorisé, la séquence de mesure se répète, et l'avancée de la lime continue.

La temporisation 13 pendant laquelle la lime tourne en marche arrière peut être fixée de sorte que le retour arrière de la lime soit limité à un secteur de tour, ce immédiatement après l'arrêt en rotation de la lime. Ce retour arrière d'un secteur de tour immédiatement après l'arrêt élimine la contrainte exercée sur la lime.

Les différentes commandes de rotation du moteur sont transmises à un circuit de commande de puissance décrit à la figure 4.

Le moteur 2 est notamment un moteur commandé par des impulsions d'un dispositif à modulation de largeur d'impulsion (Pulse width modulation) PWM. Les impulsions sont relayés par un circuit logique 34 de commande relié à quatre transistors de puissance T1, T2, T3, T4 montés en H pour pouvoir inverser la tension sur le moteur et obtenir deux sens de rotation de la lime.

Les transistors de puissance sont de préférence des transistors VMOS en raison de leurs faibles pertes de tension en mode saturé et à leur facilité de commande.

Des diodes D1, D2, D3, D4 parallèles aux transistors permettent de limiter les surtensions et servent à court-circuiter le moteur en phase d'arrêt rapide comme il sera expliqué plus bas.

L'appareil selon l'invention comporte des moyens 4 d'arrêt du moteur. Ces moyens sont en particulier des moyens de court circuit de la force électromotrice du moteur réalisés par une configuration particulière de commande des transistors.

En fonctionnement normal, la logique de commande est configurée pour rendre conducteur deux transistors en diagonale. Par exemple, si le sens de rotation positif correspond à T1 et T4 ouverts, les transistors T2, T3 de l'autre diagonale sont bloqués pour ce sens de rotation.

Partant d'une rotation normale, lorsque l'arrêt est demandé, les impulsions de commande sont arrêtées et T1 devient non conducteur. Pour obtenir un arrêt rapide, T4 est maintenu conducteur, la FEM du moteur est court-circuitée par T4 conducteur et la diode inverse de T2 qui referme le circuit sur le moteur qui s'arrête très rapidement.

On peut améliorer le principe par une commande supplémentaire et par une série de portes, mettre T4 et T2 conducteurs pendant la phase d'arrêt court-circuitant ainsi totalement la FEM du moteur qui s'arrête instantanément.

Selon l'exemple de la figure 4, T3 reçoit les impulsions du générateur, T2 est conducteur, T1 et T4 ne sont pas conducteurs, cela sur un bref instant, le moteur tourne en arrière ce qui permet à la lime de tourner d'un secteur de tour, avant d'arrêter le générateur PWM par T3 qui devient non conducteur, ce qui commande l'arrêt du moteur.

Lorsque l'appareil détecte les conditions d'arrêt moteur sur couple dépassé ou sur vitesse ralentie, il alerte le praticien au travers des moyens d'alerte 9, 10 que l'appareil est arrêté et qu'il va partir en marche arrière, car le praticien doit à ce moment tirer sur la lime pendant une temporisation donnée, par exemple 1 seconde.

Ensuite, l'appareil fait tourner la lime lentement en marche arrière, soit à une vitesse lente par exemple de 100 tours/min, ou de manière avantageuse par une montée progressive en marche arrière allant d'une vitesse nulle à la vitesse lente en quelques secondes par exemple en 1 à 2 secondes pour dégager la lime sans repousser les débris dans la région apicale jusqu'à un niveau acceptable par exemple 2mm et de repartir en sens normal et à la vitesse normale, avant de revenir doucement à l'apex.

La mesure de couple et le procédé selon l'invention permet donc de gagner du temps lorsque le couple et/ou la position a effectivement dépassé la limite fixée par la ou les consignes et permet d'agir avant la casse de la lime et d'éviter un dépassement de l'apex lorsque l'inertie de la mécanique entraîne le moteur et la lime plus loin que prévu.

L'invention ne se limite pas à l'exemple représenté et notamment, peut s'appliquer à des appareils portables et ou fixes, pourvus de moyens de mesure de l'avancement de la lime autres que des moyens de mesure avec électrodes.

## Revendications

1. - Appareil de traitement dentaire à lime rotative (1) entraînée par un moteur (2) comportant des moyens (3, 18) pour fixer une consigne de position canalaire relative à l'apex d'une dent, des moyens d'arrêt (4) du moteur en fonction de la position de la lime (1) par rapport à ladite consigne de position, des premiers moyens de mesure et de calcul (5, 6) de la longueur canalaire (L) restante entre la lime et la consigne de position, **caractérisé en ce qu'**il comporte des deuxièmes moyens de calcul (7, 7a, 7b) d'au moins une valeur dérivée (D) de la longueur canalaire restante et des troisièmes moyens de calcul (8, 8a, 8b, 8c, 8d, 8e), adaptés pour combiner la valeur dérivée et la longueur canalaire restante, la combinaison de la valeur dérivée et de la longueur canalaire par les moyens de calcul (6, 7, 8, 8a, 8b, 8c, 8d, 8e) contrôlant les moyens d'arrêt du moteur en sorte d'arrêter la rotation de la lime en anticipation de la consigne de position.

2. - Appareil de traitement dentaire selon la revendication 1 **caractérisé en ce que** ladite valeur dérivée (D) comprend la dérivée première de la longueur canalaire restante.

3. - Appareil de traitement dentaire selon la revendication 1 ou 2 **caractérisé en ce que** ladite valeur dérivée (D) comprend la dérivée seconde de la longueur canalaire restante.

4. - Appareil de traitement dentaire selon l'une quelconque des revendications précédentes **caractérisé en ce que** les troisièmes moyens de calcul (8, 8a, 8d, 8e) comprennent des moyens de pondération de la valeur dérivée (D) par un coefficient d'ajustement calculé.

5. - Appareil de traitement dentaire selon l'une quelconque des revendications précédentes **caractérisé en ce qu'**il comporte des moyens d'alerte (9, 10) d'un opérateur déclenchés sur une activation des moyens d'arrêt.

6. - Appareil de traitement dentaire selon l'une quelconque des revendications précédentes **caractérisé en ce qu'**il comporte des moyens de temporisation (11) de l'arrêt du moteur et des moyens de commande du moteur en marche arrière (12) lente pendant une durée déterminée (13) après la temporisation.

7. - Appareil de traitement dentaire selon l'une quelconque des revendications précédentes **caractérisé en ce qu'**il comporte des moyens (3) de sélection d'un couple moteur maximum de référence, des moyens (14) de mesure du couple appliqué à la lime et des moyens (15) de calcul de dépassement du couple maximum contrôlant les moyens (4) d'arrêt du moteur.

8. - Appareil de traitement dentaire selon la revendication 7 **caractérisé en ce qu'**il comporte des moyens de commande du moteur (16, 17) adaptés pour provoquer un retour arrière de la lime d'un secteur de tour immédiatement après l'arrêt en rotation de la lime.

9. - Appareil de traitement dentaire selon l'une quelconque des revendications précédentes **caractérisé en ce que**, le moteur étant alimenté par un dispositif à modulation de largeur d'impulsion, l'appareil comporte un dispositif d'asservissement de la vitesse de rotation du moteur par le dispositif à modulation à largeur d'impulsion et un dispositif de mesure du couple appliqué à la lime à partir d'une mesure de la largeur d'impulsion.

10. - Appareil de traitement dentaire selon l'une quelconque des revendications précédentes **caractérisé en ce que** les moyens (4) d'arrêt en rotation du moteur comportent des moyens de court-circuit de la force électromotrice du moteur.

11. - Procédé de commande de rotation d'une lime d'un appareil de traitement dentaire selon l'une quelconque des revendications précédentes **caractérisé en ce qu'**il comporte la détermination répétée d'une distance de la lime à une consigne de position canalaire relative à l'apex d'une dent par mesure (26), la détermination répétée par calcul (27) d'une valeur dérivée de ladite distance et le calcul répété (28) d'une position d'arrêt anticipée de la rotation de la lime en fonction de la distance de la lime à ladite consigne de position pondérée par un coefficient fonction de ladite dérivée.

12. - Procédé de commande de rotation d'une lime d'un appareil de traitement dentaire selon la revendication 11 **caractérisé en ce qu'**il comporte une étape (33) d'anticipation de l'activation de moyens d'arrêt en rotation de la lime en fonction de la valeur de ladite dérivée.

13. - Procédé de commande de rotation d'une lime d'un appareil de traitement dentaire selon l'une quelconque des revendications 7 à 10 **caractérisé en ce qu'**il comporte une détermination répétée du couple appliqué à la lime par une mesure (29), un test (30) de détection du dépassement d'une consigne de couple (31) et une activation (32) des moyens d'arrêt en rotation de la lime en réponse audit test.

14. - Procédé de commande de rotation d'une lime selon l'une quelconque des revendications 11 à 13 **caractérisé en ce qu'**il comporte une étape de rotation lente de la lime en marche arrière (12) après une temporisation (11) suivant l'activation (32) des moyens d'arrêt.

15. - Procédé de commande de rotation d'une lime selon l'une quelconque des revendications 11 à 13 **caractérisé en ce qu'**il comporte une étape de montée de vitesse progressive de la lime en marche arrière (12) après une temporisation (11) suivant l'activation (32) des moyens d'arrêt.

## Claims

1. Rotary-file dental treatment device (1) that is driven by a motor (2) that comprises means (3, 18) for fixing a root canal position setting relative to the apex of a tooth, means (4) for stopping the motor based on the position of the file (1) relative to said position setting, first means (5, 6) for measuring and calculating the remaining root canal length (L) between the file and the position setting, **characterized in that** it comprises second means (7, 7a, 7b) for calculating at least one value (D) derived from the remaining root canal length and third means (8, 8a, 8b, 8c, 8d, 8e) for calculation, suitable for combining the derived value and the remaining root canal length, whereby the combination of the derived value and the root canal length by the calculating means (6, 7, 8, 8a, 8b, 8c, 8d, 8e) control the means for stopping the motor so as to stop the rotation of the file in anticipation of the position setting.

2. Dental treatment device according to claim 1, wherein said derived value (D) comprises the first derivative of the remaining root canal length.

3. Dental treatment device according to claim 1 or 2, wherein said derived value (D) comprises the second derivative of the remaining root canal length.

4. Dental treatment device according to any of the preceding claims, wherein the third calculating means (8, 8a, 8d, 8e) comprise means for weighting the derived value (D) by a calculated adjustment coefficient.

5. Dental treatment device according to any of the preceding claims, wherein it comprises means (9, 10) for alerting an operator that are triggered upon an activation of the stopping means.

6. Dental treatment device according to any of the preceding claims, wherein it comprises means (11) for timing the stopping of the motor and means (12) for controlling the motor in slow reverse for a determined period (13) after timing.

7. Dental treatment device according to any of the preceding claims, wherein it comprises means (3) for selecting a reference maximum motor torque, means (14) for measuring the torque applied to the file and means (15) for calculating the maximum torque spike controlling the means (4) for stopping the motor.

8. Dental treatment device according to claim 7, wherein it comprises means (16, 17) for controlling the motor that are suitable for causing a retraction of the file from a turn sector immediately after stopping the file in rotation.

9. Dental treatment device according to any of the preceding claims, wherein the motor being supplied by a pulse width modulation device, the device comprises a device for controlling the rotation speed of the motor by the pulse width modulation device and a device for measuring the torque applied to the file starting from a measurement of the pulse width.

10. Dental treatment device according to any of the preceding claims, wherein the means (4) for stopping the motor in rotation comprise means for short-circuiting the electromotive force of the motor.

11. Process for controlling the rotation of a file of a dental treatment device according to any of the preceding claims, wherein it comprises the repeated determination of a distance from the file to a root canal position setting relative to the apex of a tooth by measurement (26), the determination repeated by calculation (27) of a value derived from said distance and the repeated calculation (28) of an early stopping position of the rotation of the file based on the distance from the file to said position setting that is weighted by a coefficient based on said derivative.

12. Process for controlling the rotation of a file of a dental treatment device according to claim 11, wherein it comprises a stage (33) for anticipation of the activation of means for stopping the file in rotation based on the value of said derivative.

13. Process for controlling the rotation of a file of a dental treatment device according to any of claims 7 to 10, wherein it comprises a repeated determination of the torque applied to the file by a measurement (29), a test (30) for detecting the spike of a torque setting (31) and an activation (32) of the means for stopping the file in rotation in response to said test.

14. Process for controlling the rotation of a file according to any of claims 11 to 13, wherein it comprises a slow rotation stage of the file in reverse (12) after a lime delay (11) following the activation (32) of the stopping means.

15. Process for controlling the rotation of a file according to any of claims 11 to 13, wherein it comprises a stage of gradually increasing the speed of the file (12) in reverse after a time delay (11) following the activation (32) of the stopping means.

## Patentansprüche

1. Vorrichtung zur Zahnbehandlung mit einer durch einen Motor (2) angetriebenen drehbaren Feile (1), welche Mittel (3, 18) zur Fixierung einer Kanalsollposition relativ zum Apex eines Zahnes, Mittel zum Anhalten (4) des Motors in Abhängigkeit von der Position der Feile (1) relativ zur besagten Sollposition, erste Mittel zur Messung und zur Berechnung (5, 6) der zwischen der Feile und der Sollposition verbleibenden Kanallänge (L), **gekennzeichnet dadurch, dass** sie ein zweites Mittel zur Berechnung (7, 7a, 7b) umfasst, von mindestens einem abgeleiteten Wert (D) der verbleibenden Kanallänge und dritte Mittel zur Berechnung (8, 8a, 8b, 8c, 8d, 8e), angepasst um den abgeleiteten Wert und die verbleibende Kanallänge zu kombinieren, wobei die Kombination des abgeleiteten Wertes und der Kanallänge durch die Mittel zur Berechnung (6, 7, 8, 8a, 8b, 8c, 8d, 8e) die Mittel zum Anhalten des Motors kontrolliert, derart, dass die Drehung der Feile in Vorausschau der Sollposition angehalten wird.

2. Vorrichtung zur Zahnbehandlung gemäß Anspruch 1, **gekennzeichnet dadurch, dass** besagter abgeleiteter Wert (D) die erste Ableitung der verbleibenden Kanallänge umfasst.

3. Vorrichtung zur Zahnbehandlung gemäß der Ansprüche 1 oder 2, **gekennzeichnet dadurch, dass** besagter abgeleiteter Wert (D) die zweite Ableitung der verbleibenden Kanallänge umfasst.

4. Vorrichtung zur Zahnbehandlung gemäß einem beliebigen vorangegangenen Anspruch, **gekennzeichnet dadurch, dass** die dritten Mittel zur Berechnung (8, 8a, 8d, 8e) Mittel zur Gewichtung des abgeleiteten Wertes (D) durch einen berechneten Anpasskoeffizienten umfassen.

5. Vorrichtung zur Zahnbehandlung gemäß einem beliebigen vorangegangenen Anspruch, **gekennzeichnet dadurch, dass** sie Mittel (9, 10) zur Warnung eines Betreibers umfasst, welche bei der Aktivierung des Mittels zum Anhalten ausgelöst werden.

6. Vorrichtung zur Zahnbehandlung gemäß einem beliebigen vorangegangenen Anspruch, **gekennzeichnet dadurch, dass** sie Mittel zur Verzögerung (11) des Anhaltens des Motors und Mittel zur Steuerung des Motors in langsamem Rückwärtslauf (12), während einer vordefinierten Zeit (13) im Anschluss an die Verzögerung, umfasst.

7. Vorrichtung zur Zahnbehandlung gemäß einem beliebigen vorangegangenen Anspruch, **gekennzeichnet dadurch, dass** sie Mittel (3) zur Auswahl eines maximalen Referenzdrehmoments des Motors, Mittel (14) zur Messung des auf die Feile angewendeten Drehmoments und Mittel (15) zur Berechnung des Überschreitens des maximalen Drehmoments, welche die Mittel (4) zum Abschalten des Motors kontrollieren, umfasst.

8. Vorrichtung zur Zahnbehandlung gemäß Anspruch 7, **gekennzeichnet dadurch, dass** sie Mittel zur Steuerung des Motors (16, 17) umfasst, welche angepasst sind, um eine Umkehr der Feile um einen Umdrehungsabschnitt sofort nach Anhalten der Drehung der Feile zu bewirken.

9. Vorrichtung zur Zahnbehandlung gemäß einem beliebigen vorangegangenen Anspruch, **gekennzeichnet dadurch, dass** der Motor durch ein Gerät zur Modulierung der Impulsbreite gespeist wird, wobei die Vorrichtung ein Gerät zur Steuerung der Drehgeschwindigkeit des Motors durch das Gerät zur Modulierung der Impulsbreite und ein Gerät zur Messung des Drehmoments, welches auf die Feile appliziert wird, welche auf einer Messung der Impulsbreite basiert, umfasst.

10. Vorrichtung zur Zahnbehandlung gemäß einem beliebigen vorangegangenen Anspruch, **gekennzeichnet dadurch, dass** die Mittel (4) zum Anhalten der Drehung des Motors Mittel zum Kurzschluss der elektromotorischen Kraft des Motors umfassen.

11. Verfahren zur Steuerung der Drehung einer Feile einer Vorrichtung zur Zahnbehandlung gemäß einem beliebigen vorangegangenen Anspruch, **gekennzeichnet dadurch, dass** es die wiederholte Bestimmung durch Messung (26) eines Abstandes der Feile zu einer Kanalsollposition, relativ zum Apex eines Zahnes umfasst, wobei die wiederholte Bestimmung durch Berechnung (27) eines abgeleiteten Wertes des besagten Abstandes und die wiederholte Berechnung (28) einer antizipierten Anhalte-Position der Drehung der Feile, in Abhängigkeit von der Entfernung der Feile von besagter Sollposition, gewichtet durch einen Koeffizienten, welcher eine Funktion der besagten Ableitung ist, erfolgt.

12. Verfahren zur Steuerung der Drehung einer Feile einer Vorrichtung zur Zahnbehandlung gemäß Anspruch 11, **gekennzeichnet dadurch, dass** es einen Schritt (33) zur Antizipation der Aktivierung der Mittel zum Anhalten der Drehung der Feile, in Abhängigkeit von dem Wert der besagten Ableitung umfasst.

13. Verfahren zur Steuerung der Drehung einer Feile einer Vorrichtung zur Zahnbehandlung gemäß einem beliebigen Anspruch 7 bis 10, **gekennzeichnet dadurch, dass** es eine wiederholte Bestimmung des auf die Feile angewendeten Drehmoments durch eine Messung (29), einen Test (30) zur Feststellung des Überschreitens eines Solldrehmoments (31) und eine Aktivierung (32) von Mitteln zum Anhalten der Drehung der Feile in Antwort auf besagten Test umfasst.

14. Verfahren zur Steuerung der Drehung einer Feile gemäß einem beliebigen Anspruch 11 bis 13, **gekennzeichnet dadurch, dass** es einen Schritt zur langsamen Drehung der Feile im Rückwärtsgang (12) nach einer Verzögerung (11) folgend der Aktivierung (32) der Mittel zum Anhalten umfasst.

15. Verfahren zur Steuerung der Drehung einer Feile gemäß einem beliebigen Anspruch 11 bis 13, **gekennzeichnet dadurch, dass** es einen Schritt zur progressiven Steigerung der Geschwindigkeit der Feile im Rückwärtsgang (12) nach einer Verzögerung (11) folgend der Aktivierung (32) der Mittel zum Anhalten umfasst.
